# EUROPEAN PATENT SPECIFICATION

(11) **EP 1 180 881 B1**
(45) Date of publication and mention of the grant of the patent: **01.10.2003**
(21) Application number: 01305711.2
(22) Date of filing: 02.07.2001
(51) Int. Cl.: H04L 12/56, H04Q 7/38

(54) **Adaptive data scheduling using neighboring base station load information for TDMA systems**
Verfahren und System zur Datenübertragungsplanung durch Verkehrbelastungshinweise von benachbarten Basisstationen
Procédé et système d'allocation adaptive de transmission de données en utilisant des informations de charge des stations de base voisines

(30) Priority: 11.08.2000 US 635857
(43) Date of publication of application: 20.02.2002
(73) Proprietor: LUCENT TECHNOLOGIES INC., Murray Hill, New Jersey 07974-0636 (US)
(72) Inventor: Rudrapatna, Ashok N., Basking Ridge, NJ 07920 (US); Zeger, Linda M., New Providence, NJ 07974 (US)
(74) Representative: Watts, Christopher Malcolm Kelway, Dr.

(56) References cited:
- EP-A- 0 767 548
- US-A- 5 914 950
- US-A- 6 069 885

## Description

### BACKGROUND OF THE INVENTION

### 1. Field of the invention

The present invention relates generally to the field of telecommunications and, more particularly, to adaptive data scheduling using neighboring base station load information in a wireless telecommunications system.

### 2. Description of the Related Art

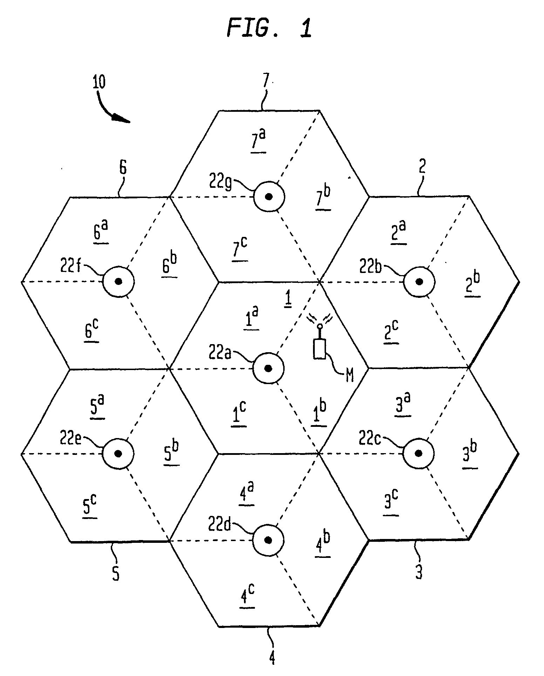

Fig. 1 illustrates a portion of the components of an exemplary multiple access communications system 10. The system 10 includes a plurality of cells 1, 2, 3, 4, 5, 6, 7 (collectively referred to herein as "cells"). The cells represent a portion of the geographic coverage area served by the system 10. In Fig. 1 each cell is schematically represented by a hexagon; in practice, however, each cell usually has an irregular shape that depends on the topology of the terrain serviced by the system 10. Within each cell 1, 2, 3, 4, 5, 6, 7 is a base station 22A, 22B, 22C, 22D, 22E, 22F, 22G (collectively referred to herein as "base stations 22"), respectively, which is typically connected to a public switched telephone network ("PSTN") through a mobile switching center ("MSC") (the PSTN and MSC are not shown for convenience purposes). Each cell 1, 2, 3, 4, 5, 6, 7 is illustrated as having three sectors 1^{a}, 1^{b}, 1^{c}, through 7^{a}, 7^{b}, 7^{c}, respectively, which are typical in a communications system implementing a frequency reuse pattern. That is, the exemplary system 10 has a 1/3 frequency reuse pattern (i.e., as known in the art, the system 10 can allocate a particular frequency every three cells).

In operation, the base stations 22 establish wireless communications links with wireless or mobile devices e.g., mobile device M, within the cells 20 wishing to transmit and receive digital data. The wireless link between a mobile device and a base station comprises an uplink for transmitting information from the mobile device, to the base station, and a downlink for transmitting information received by the base station to the mobile device. Sometimes the downlink is referred to as a forward link.

Multiple access techniques regulate communications for the various mobile devices within a cell given a limited available bandwidth. An exemplary multiple access technique includes TDMA ("time-division multiple access"). In a TDMA system, frequency channels are divided into a plurality of time slots. Some slots are used for control purposes and others are used for information transfer. Typically, multiple users are given respective slots in a frequency channel so that a single frequency channel can accommodate multiple users.

A number of third generation systems are evolving from the current wireless communications technology such as TDMA IS-136 and GSM ("Global System for Communication") systems. These third generation systems will transmit voice information and non-voice data to the mobile devices of their users. Examples of these third generation TDMA systems include general packet radio service ("GPRS") and enhanced GPRS ("EGPRS"). A goal of these third generation systems is to enable mobile devices to transmit information to and receive information from the Internet. Thus, services currently available over the Internet, such as FTP ("file transfer protocol"), web browsing, chat, electronic mail ("e-mail"), telnet, etc., will be available to the mobile devices that are part of a third generation TDMA system.

In second generation TDMA systems the base station transmit power is usually fixed. Thus, in order for the carrier signal to interference ratio ("C/I") of a downlink transmission to meet a minimum required threshold in most of the area of the cell, the power allocated per mobile must be high. With a high power allocation, the C/I of downlink transmissions should exceed the minimum threshold in most of the cell.

Some of the third generation TDMA systems are going to have a very high frequency reuse, such as "compact EDGE ("enhanced data rates for GSM evolution")," which will have a 1/3 frequency reuse pattern (see FIG. 1), and EGPRS, which will have a 4/12 frequency reuse pattern. Given the high frequency reuse, the transmission data rates of these systems will be limited by interference, especially when the power allocated per mobile is fixed and therefore, high. This interference from other sectors can result in low data rates for users and an overall low system throughput.

Thus, there is a desire and need to substantially increase the data rates of individual users of a third generation communications system. There is also a desire and need to increase the overall throughput of the third generation communications system.

EP-A-0 767 548 discloses a CDMA telecommunication system. In response to a request from a mobile station for a data rate in excess of the basic data rate, the system determines the amount of interference that the mobile station will generate at neighboring base stations. The system uses the interference information to assign a data rate, to the mobile station, that will satisfy the all adjacent cell interference concerns.

US-A-5 914 950 discloses a CDMA system capable of having variable rate transmissions. Each remote station in the system is assigned a maximum unscheduled transmission rate for a particular communication. A scheduler is used to assign a maximum scheduled transmission rate for certain transmissions based upon a set of criteria and system constraints.

US-A-6 069 885 discloses a system for scheduling transmissions between a plurality of communication sites. The system uses a "left-right" scheduling protocol to divide transmissions between two different schedules. The system uses the two schedules to alternate the side from which a communication site is to transmit information in a data frame.

### SUMMARY OF THE INVENTION

The present invention provides a mechanism for substantially increasing the data rates of the users in a third generation communications system.

The present invention also provides a mechanism for increasing the throughput of a third generation communications system.

The above and other features and advantages of the invention are achieved by a telecommunications system having a first base station that utilizes neighboring base station load information to adaptively schedule transmissions to mobile devices within the base station's coverage area. Before transmitting information to a mobile device, the first base station determines whether neighboring base stations causing the most interference to the mobile device have a load below a loading threshold (i.e., if the neighboring base stations are "lightly loaded"). If the first base station determines that the neighboring base stations are lightly loaded, then the neighboring base stations are providing little to no interference to the mobile device at which point, the first base station should transmit to the mobile device with high priority, since in this case a higher data rate can be used. If the first base station determines that the neighboring base stations are not lightly loaded, then the neighboring base stations are causing sufficient interference to the mobile device that immediate transmissions to the mobile device should be given low priority, since the data would be small. Thus, the first base station schedules transmissions in time slots at times when the transmissions can be made at high data rates, which increases the data rates to the mobile devices and the overall throughput of the system.

### BRIEF DESCRIPTION OF THE DRAWINGS

The foregoing and other advantages and features of the invention will become more apparent from the detailed description of the preferred embodiments of the invention given below with reference to the accompanying drawings in which:
Fig. 1 illustrates a portion of a wireless communications system;
Fig. 2 illustrates an exemplary base station constructed in accordance with an exemplary embodiment of the present invention;
Fig. 3 illustrates in flowchart form exemplary call processing method performed by the base station of Fig. 2; and
Fig. 4 illustrates in flowchart form another exemplary call processing method performed by the base station of Fig. 2.

### DETAILED DESCRIPTION OF PREFERRED EMBODIMENTS

The present invention is suitable for use in a wireless telecommunications system, such as a third generation TDMA system. As noted above, an example of a third generation TDMA system includes a GPRS system and thus, the present invention is suitable for use in GPRS. It should be appreciated, however, that the present invention is suitable for any type of telecommunications system (e.g., code-division multiple access (CDMA), GSM, etc.), and particularly those systems in which wireless or mobile devices experience interference from base stations outside of the cell in which the wireless or mobile device is located. The base stations located outside of the mobile device's cell are referred to herein as "neighboring base stations." The phrase "mobile device" is used herein to refer to any wireless communications device or terminal that may be serviced by a base station.

The phrases "interfering neighboring base station" or "interfering neighboring base stations" are used herein to describe neighboring base stations that provide the most interference (with respect to the interference from other neighboring base stations) to a particular mobile device. The phrase "lightly loaded" is used herein to describe the situation where an interfering neighboring base station has a load less than a loading threshold and thus, is not providing much interference to the mobile device. It should be apparent that if a cell is divided into sectors or if frequency reuse patterns are being utilized by the system, then the same base station will transmit to all sectors in a cell. Thus, it is possible for the same base station to be lightly loaded in one sector, yet substantially loaded in another sector. Moreover, the same base station may be interfering with a mobile device in one sector, but not in another. The phrase "interfering sector" is used herein to designate a sector in which the mobile device receives substantial interference from an interfering neighboring base station or other sector of the same cell. The phrase "servicing base station" is used herein to refer to the base station providing service to the mobile device (i.e., the base station providing service within the cell that the mobile device is located within).

As will become apparent from the following detailed description, when a servicing base station of the present invention is incorporated into a wireless telecommunications system using fixed transmit power to each mobile (hereinafter referred to as "fixed power systems"), the servicing base station will utilize load information from a mobile's interfering neighboring base station/stations to adaptively schedule transmissions to the mobile at times when higher data rates can be achieved. Thus, higher data rate transmissions can occur when there is less interference and better C/I. It must be noted that the interfering neighboring base stations may only be interfering in one sector and thus, the determination of whether that base station is lightly loaded is made based solely on the downlink power within the interfering sector.

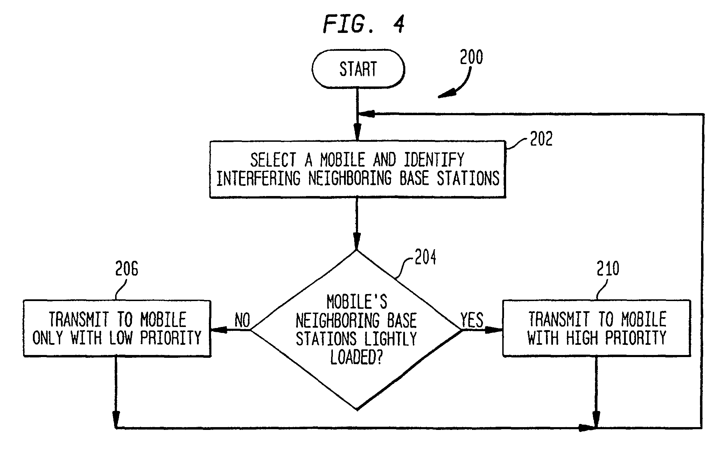

As will be discussed below with reference to Fig. 4, when the servicing base station of the present invention is used in a system implementing power control (hereinafter referred to as a "power control system"), the servicing base station will utilize load information from the interfering neighboring base station/stations to adaptively schedule transmissions to the mobile at times when low power transmissions can be made. Again, it must be noted that the interfering neighboring base stations may only be interfering in one sector and thus, the determination of whether that base station is lightly loaded is made based solely on the downlink power within the interfering sector. Thus, in fixed power systems, the base station of the present invention schedules transmissions at times when high data rates can be achieved. In power control systems, the present invention schedules transmissions when low power transmissions can be made, thus servicing its mobile devices with less power, which reduces interference to its neighbors. In either system, the base station of the present invention increases the overall throughput of the system.

The present invention takes advantage of the statistical fluctuations of each cell's forward link transmit power. A base station's transmit power can fluctuate with the number of mobile devices it is servicing. Furthermore, since Internet traffic often appears bursty so that periods of high data rates are followed by periods of inactivity, a base station's transmit power may be lower at times during which fewer of the mobile devices it is serving are receiving data. At other times, a base station will transmit near its maximum power, for example, when it has a number of active mobile devices, all of which are simultaneously receiving data.

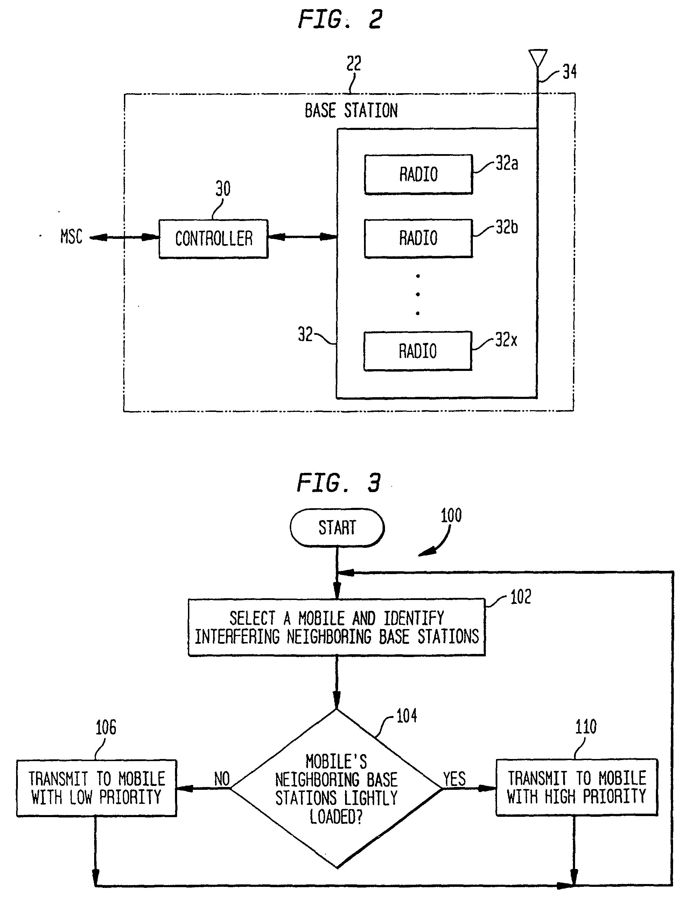

Fig. 2 illustrates a base station 22 constructed in accordance with the present invention. The base station 22 includes a controller 30, antenna 34 and radio module 32 connected in a conventional manner. The radio module 32 contains a plurality of radios 32a, 32b, ... 32x. The controller 30 may include a programmed microprocessor coupled to a memory device or it may be an application specific integrated circuit (ASIC). It is desirable for the controller to include a programmed processor and memory so the methods of the present invention can be implemented in software. The controller 30 is coupled to the radio module 32 and is in communication with the MSC. The controller 30 controls and coordinates the operations of the base station 22 including, but not limited to, call processing and power control functions (if the system uses power control) while also communicating with the MSC. With the provision of some additional software, the controller 30 will also implement the methods 100 (Fig. 3), 200 (Fig. 4) of the present invention.

The following example will be used to illustrate the operation of the base station of the present invention. With reference to Fig. 1, the system 10 utilizes a 1/3 frequency reuse pattern and a mobile device M is located within a sector 1^{b} of cell 1. In this example, the mobile device M, which will be serviced by base station 22a, is near the vertex that joins cell 1 to cells 2 and 7. In this example, it is presumed that most of the interference that the mobile device M experiences will be from the base stations servicing sectors 2^{c} and 3^{a}. It should be noted that there could also be interference from the base station servicing sector 7^{c} or other sectors within the system 10, but for this example, it is presumed that most of the interference that the mobile device M experiences will be from the base stations servicing sectors 2^{c} and 3^{a}. The determination of the base stations providing the most interference to the mobile device M can be performed during system set-up, calibration, or any other suitable time, by measuring the interference experienced at the mobile device M from each neighboring base station(and each sector) or by any other method including, but not limited to, geographical or mathematical evaluations and simulations. It should be noted, however, that the exact mechanism used to determine which base stations provide interference to the mobile device M and which ones provide the most interference does not matter. Thus, the interfering sectors are 2^{c} and 3^{a}, which means that most of the interference that the mobile device M experiences will be from base stations 22b and 22c (from their downlink transmissions to 2^{c} and 3^{a}). Thus, in this example, the servicing base station is base station 22a and the interfering base stations will be base stations 22b and 22c. The system in this example is a fixed power system and it is desirable for the servicing base station 22a to transmit to the mobile device M when the interfering neighboring base stations 22b, 22c are lightly loaded with respect to sectors 2^{c} and 3^{a} so that the transmissions to the mobile device M can be made at a higher data rate.

Referring now to Figs. 1 and 3, a first exemplary method 100 to perform adaptive data scheduling using neighboring base station load information is now described. As noted above, it is desired that the method 100 be implemented in software and executed by the base station 22 illustrated in Fig. 2. It should be noted, however, that the method 100 could also be implemented in hardware, such as an ASIC, or a combination of hardware and software. It is also desirable for the method 100 to be executed by every base station 22 in the system 10.

The method 100 begins when the servicing base station 22a selects a mobile device M to which to transmit data (step 102). The servicing base station 22a also identifies potential interfering neighboring base stations based on the location of the mobile device M as well as possibly on the signal strength received by the mobile M from other base stations. For a mobile device M near a cell or sector border, e.g., 2^{c} and 3^{a}, the base stations servicing these sectors generally will be the potentially interfering neighboring base stations. Thus, these sectors 2^{c} and 3^{a}, and the base stations 22b and 22c servicing them will be identified as the interfering neighboring base stations. Depending on geography, traffic and experience, the servicing base station 22a can be programmed to monitor and identify other sets of interfering neighboring base stations during initial set-up and testing of the base station 22a. For instance, all of the adjacent cells could be monitored for a mobile device M near a cell or sector border, or cells outside those immediately adjacent to the cell of the servicing base station 22a could be monitored.

At step 104, the servicing base station 22a determines if the mobile device's interfering neighboring base stations 22b, 22c are lightly loaded with respect to the interfering sectors 2^{c} and 3^{a}. One technique for determining whether the interfering base stations 22b, 22c are lightly loaded (or not) is disclosed in EP-A-1 161 112 which describes providing the servicing base station with an antenna for directly measuring the downlink power of interfering neighboring base stations. Once the downlink power is measured, it is compared to a reference downlink power for that neighboring base station, and a determination as to whether the interfering neighboring base station is lightly loaded is made based on the comparison.

This same "mutual monitoring" technique can be utilized by the present invention. Since the present example utilizes a 1/3 frequency reuse pattern and multiple sectors in a cell, the "mutual monitoring" technique of the co-pending application could require a slight extension to ensure the proper monitoring of the interference on a per sector basis. For example, since it is possible that the mobile device M can potentially receive significant amounts of interference from base station 22f via sector 6^{b}, the servicing base station should be able to measure the downlink power of base station 22f in the direction of sector 6^{b}. However, if the downlink power measuring antenna in sector 1^{b} receives power only in the direction of its own sector, this antenna will not receive significant power from base station 22f in the direction of sector 6^{b}, even though the mobile can. In this case, the downlink power measuring antenna of base station 22a in sector 1^{a} can be used to measure the power from base station 22f in the direction of sector 6^{b}; this information can then be transmitted via base station hardware from sector 1^{a} to 1^{b}.

Another technique for determining whether the interfering base stations 22b, 22c are lightly loaded (or not) with respect to interfering sectors 2^{c} and 3^{a}, is for the mobile device M to take measurements of the power it receives from the interfering neighboring base stations. Once the mobile device M takes these measurements, it can report it back to the servicing base station 22a, which will then use the measured power to determine if the interfering neighboring base station is lightly loaded with respect to the interfering sectors.

If at step 104 the servicing base station 22a determines that the interfering neighboring base stations 22b, 22c are not lightly loaded with respect to the interfering sectors 2^{c} and 3^{a}, then the method 100 continues at step 106. At this point, a transmission to the mobile device M would have a low C/I. At step 106 the servicing base station 22a will not transmit to the mobile device M at this time unless there are no other mobile devices with high priority for service. The servicing base station 22a can use the time slots to transmit with high data rates to mobile devices that are not experiencing interference from their neighboring base stations.

If at step 104 the servicing base station 22a determines that the interfering neighboring base stations 22b, 22c are lightly loaded with respect to the interfering sectors 2^{c} and 3^{a}, then the method 100 continues at step 110. At this point, a transmission to the mobile device would have a high or acceptable C/I. At step 110 the servicing base station gives high priority to transmit to the mobile device M. Thus, the method 100 attempts to transmit to mobile devices at times when the data rates used will be highest. This substantially increases the data rates of the mobile device M and the overall throughput of the system 10.

The present invention will now be described with its use in a power control system. As is known in the art, a base station process known as power control regulates the transmitting power of the base station and the mobile devices communicating with the base station. This typically occurs in CDMA (code-division multiple access) systems, but it can be incorporated into third generation TDMA systems as well. The power control process also regulates the number of users that a cell can support at any one time based on the amount of noise and interference present within the cell. Interference caused by users of the same cell and interference caused by users in other cells is a limiting factor to the capacity of the cell and the system. It is desired to reduce the power of transmissions to and from the base stations and thus, reduce the amount of interference within the cells (or sectors within the cells) so that the capacity and throughput of the system can be increased.

The following example will be used to illustrate the operation of the base station of the present invention with a system utilizing power control. With reference to Fig. 1, the system 10 utilizes a 1/3 frequency reuse pattern and a mobile device M is located within a sector 1^{b} of cell 1. As in the prior example, the mobile device M, which will be serviced by base station 22a, is near the vertex that joins cell 1 to cells 2 and 7. It is presumed that most of the interference that the mobile device M experiences will be from the base stations servicing sectors 2^{c} and 3^{a}. It should be noted that there could also be interference from the base station servicing sector 7^{c} or other sectors within the system 10, but for this example, it is presumed that most of the interference that the mobile device M experiences will be from the base stations servicing sectors 2^{c} and 3^{a}. The interfering sectors are 2^{c} and 3^{a}, which means that most of the interference that the mobile device M experiences will be from base stations 22b and 22c (from their downlink transmissions to 2^{c} and 3^{a}). The servicing base station is base station 22a and the interfering base stations will be base stations 22b and 22c. The system in this example utilizes power control and thus, it is desirable for the servicing base station 22a to transmit to the mobile device M when the interfering neighboring base stations 22b, 22c are lightly loaded with respect to sectors 2^{c} and 3^{a} so that the less power is used during the transmissions to the mobile device M.

Referring now to Figs. 1 and 4, another exemplary method 200 to perform adaptive data scheduling using neighboring base station load information is now described. As noted above, it is desired that the method 200 be executed by the base station 22 illustrated in Fig. 2. It is also desirable for the method 200 to be executed by every base station in the system 10.

The method 200 begins when the servicing base station 22a selects a mobile device M to which to transmit data (step 202). The servicing base station 22a also identifies potential interfering neighboring base stations based on the mobile device's location (described above). At step 204, the servicing base station 22a determines if the mobile device's interfering neighboring base stations 22b, 22c are lightly loaded with respect to the interfering sectors 2^{c} and 3^{a}. This determination can be made by one of the two techniques listed above.

If at step 204 the servicing base station 22a determines that the interfering neighboring base stations 22b, 22c are not lightly loaded with respect to the interfering sectors 2^{c} and 3^{a}, then the method 200 continues at step 206. At this point, a transmission to the mobile device M would result in a low C/I at the mobile device M and would require an increase in transmission power to compensate for the low C/I. At step 206, the servicing base station 22a gives low priority to transmit to the mobile device M. This way, the servicing base station 22a would not waste power on this transmission. More importantly, by not transmitting with increased power, the servicing base station 22a will not increase the interference to mobile devices that receive the most interference from the servicing base station 22a.

If at step 204 the servicing base station 22a determines that the interfering neighboring base stations 22b, 22c are lightly loaded with respect to the interfering sectors 2^{c} and 3^{a}, then the method 200 continues at step 210. At this point, a transmission to the mobile device would have a high or acceptable C/I and less power is required for the transmission. At step 210 the servicing base station transmits to the mobile device M with high priority. Thus, the method 200 attempts to transmit to mobile devices only at times when lower power transmissions can be used. This substantially reduces the co-channel interference caused by the servicing base station 22a and substantially increases the overall throughput of the system 10.

The methods of the present invention is preferably implemented in software and the software instructions and data can be stored in PROM, EEPROM or other nonvolatile memory connected to or contained within the controller. The software used in the present invention can be stored on a hard drive, floppy disc, CD-ROM or other permanent or semi-permanent storage medium and subsequently transferred to the memory of the controller. The program embodying the method of the present invention can also be divided into program code segments, downloaded, for example, from a server computer or transmitted as a data signal embodied in a carrier wave to the controller as is known in the art.

While the invention has been described in detail in connection with the preferred embodiments known at the time, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Accordingly, the invention is not to be seen as limited by the foregoing description, but is only limited by the scope of the appended claims.

## Claims

1. A method of transmitting information to a wireless device in a telecommunications system, said method comprising the steps of:
determining if at least one neighboring base station of the wireless device has a load below a loading threshold; and
adjusting data transmissions to the wireless device based on the determination; **characterized in that**:
said neighboring base station is a neighboring base station potentially causing interference to said wireless device; and
said adjustment comprises adjusting time slots of said transmissions.

2. The method of claim 1, wherein said adjusting step gives high priority to transmit to the wireless device if it is determined that the load of the at least one neighboring base station is below the loading threshold.

3. The method of claim 1, wherein said adjusting step transmits to the wireless device with low priority if it is determined that the load of the at least one neighboring base station is not below the loading threshold.

4. The method of claim 1, wherein said determining step comprises:
identifying neighboring base stations that may interfere with transmissions to the wireless device based on the location of the wireless device and received signal strengths at a wireless device associated with the identified base stations;
monitoring the load of the identified base stations; and
comparing the monitored load to the loading threshold.

5. The method of claim 4, wherein said monitoring step comprises:
receiving a signal indicative of the load from the identified base stations; and
comparing the signal to a reference signal corresponding to the loading threshold.

6. The method of claim 4, wherein said monitoring step comprises:
receiving a signal indicative of the load on the identified base stations from the wireless device; and
comparing the signal to a reference signal corresponding to the loading threshold.

7. The method of claim 1, wherein the wireless device is located within a sector of a cell and the at least one neighboring base station is a base station that provides significant interference to the wireless device.

8. A base station for a wireless telecommunications system, said base station comprising:
a controller, said controller for determining if at least one neighboring base station of a wireless device has a load below a loading threshold and for adjusting data transmissions to the wireless device based on the determination; **characterized in that**:
said neighboring base station is a neighboring base station potentially causing interference to said wireless device; and
said adjustment comprises adjusting time slots of said transmissions.

9. The base station of claim 8, wherein said controller adjusts the data transmission by transmitting to the wireless device at a high data rate if it is determined that an aggregate load from a significant interfering neighboring base station is below the loading threshold.

10. The base station of claim 8, wherein said controller adjusts the data transmission by transmitting to the wireless device with low priority if it is determined that an aggregate load from significant interfering neighboring base stations is greater than or equal to the loading threshold.

11. The base station of claim 8, wherein said controller determines if the load of the at least one neighboring base station is below the loading threshold by identifying neighboring base stations that may interfere with transmissions to the wireless device based on the location of the wireless device or received signal strength at a wireless device associated with the identified base stations, monitoring a load of the identified base stations, and comparing the monitored load to the loading threshold.

12. The base station of claim 11, wherein said controller monitors the load of the identified base stations by receiving a signal indicative of the load from the identified base stations and comparing the signal to a reference signal corresponding to the loading threshold.

13. The base station of claim 11, wherein said controller monitors the load of the identified base stations by receiving a signal indicative of the load on the identified base stations from the-wireless device and comparing the signal to a reference signal corresponding to the loading threshold.

14. The base station of claim 11, wherein the wireless device is located within a sector of a cell and the controller identifies neighboring base stations as base stations that provide the most interference to the wireless device.

15. A wireless telecommunications system, said system comprising:
a first base station, said first base station for determining if neighboring base stations of a wireless device have a load below a loading threshold and for adjusting data transmissions to the wireless device based on the determination; **characterized in that**:
said neighboring base stations are neighboring base stations potentially causing most interference to said wireless device; and
said adjustment comprises adjusting time slots of said transmissions.

16. The system claim 15, wherein said first base station adjusts the data transmission by transmitting to the wireless device with high priority if it is determined that the load of the neighboring base stations are below the loading threshold.

17. The system of claim 15, wherein said first base station adjusts the data transmission by transmitting to the wireless device with low priority if it is determined that the load of the neighboring base stations are not below the loading threshold.

18. The system of claim 15, wherein said first base station determines if the neighboring base stations have a load below the loading threshold by identifying neighboring base stations that may interfere with transmissions to the wireless device based on the location of the wireless device or received signal strengths from the identified base stations, monitoring the load of the identified base stations, and comparing the monitored load to the loading threshold.

19. The system of claim 18, wherein said first base station monitors the load of the identified base stations by receiving a signal indicative of the load from the identified base stations and comparing the signal to a reference signal corresponding to the loading threshold.

20. The system of claim 18, wherein said first base station monitors the load of the identified base stations by receiving a signal indicative of the load on the identified base stations from the wireless device and comparing the signal to a reference signal corresponding to the loading threshold.

## Patentansprüche

1. Verfahren zur Übertragung von Informationen an ein drahtloses Gerät in einem Telekommunikationssystem, wobei das Verfahren folgende Schritte umfasst:
Feststellen, ob wenigstens eine benachbarte Basisstation des drahtlosen Geräts eine Last unterhalb einer Lastschwelle aufweist; und
Einstellen der Datenübertragungen an das drahtlose Gerät auf der Grundlage der Feststellung,
**dadurch gekennzeichnet, dass**:
die benachbarte Basisstation eine benachbarte Basisstation ist, welche möglicherweise eine Störung des drahtlosen Geräts verursacht; und
die Einstellung das Einstellen von Zeitschlitzen der Übertragungen umfasst.

2. Verfahren nach Anspruch 1, wobei der Schritt des Einstellens hohe Priorität zur Übertragung an das drahtlose Gerät gibt, falls festgestellt wird, dass die Last der wenigstens einen benachbarten Basisstation unterhalb der Lastschwelle liegt.

3. Verfahren nach Anspruch 1, wobei der Schritt des Einstellens mit geringer Priorität an das drahtlose Gerät überträgt, falls festgestellt wird, dass die Last der mindestens einen benachbarten Basisstation nicht unterhalb der Lastschwelle liegt.

4. Verfahren nach Anspruch 1, wobei der Schritt des Feststellens umfasst:
Identifizieren benachbarter Basisstationen, welche Übertragungen an das drahtlose Gerät stören können, auf der Grundlage des Standorts des drahtlosen Geräts und der empfangenen Signalstärken an einem drahtlosen Gerät, welches den identifizierten Basisstationen zugeordnet ist;
Überwachen der Last der identifizierten Basisstationen; und
Vergleichen der überwachten Last mit der Lastschwelle.

5. Verfahren nach Anspruch 4, wobei der Schritt des Überwachens umfasst:
Empfangen eines Signals von den identifizierten Basisstationen, welches die Last anzeigt; und
Vergleichen des Signals mit einem Referenzsignal, welches der Lastschwelle entspricht.

6. Verfahren nach Anspruch 4, wobei der Schritt des Überwachens umfasst:
Empfangen eines Signals vom drahtlosen Gerät, welches die Last auf den identifizierten Basisstationen anzeigt; und
Vergleichen des Signals mit einem Referenzsignal, welches der Lastschwelle entspricht.

7. Verfahren nach Anspruch 1, wobei das drahtlose Gerät innerhalb eines Sektors einer Zelle lokalisiert ist und die wenigstens eine benachbarte Basisstation eine Basisstation ist, welche am drahtlosen Gerät eine deutliche Störung bewirkt.

8. Basisstation für ein drahtloses Telekommunikationssystem, wobei die Basisstation umfasst:
ein Steuergerät, wobei das Steuergerät feststellt, ob wenigstens eine benachbarte Basisstation eines drahtlosen Geräts eine Last unterhalb einer Lastschwelle aufweist, und Datenübertragungen zum drahtlosen Gerät auf der Grundlage der Feststellung einstellt,
**dadurch gekennzeichnet, dass**:
die benachbarte Basisstation eine Basisstation ist, welche möglicherweise eine Störung des drahtlosen Geräts verursacht; und
die Einstellung das Einstellen von Zeitschlitzen der Übertragungen umfasst.

9. Basisstation nach Anspruch 8, wobei das Steuergerät die Datenübertragung einstellt, indem zum drahtlosen Gerät mit hoher Datengeschwindigkeit übertragen wird, falls festgestellt wird, dass eine Gesamtlast von einer deutlich störenden benachbarten Basisstation unterhalb der Lastschwelle liegt.

10. Basisstation nach Anspruch 8, wobei das Steuergerät die Datenübertragung einstellt, indem zum drahtlosen Gerät mit geringer Priorität übertragen wird, falls festgestellt wird, dass eine Gesamtlast von deutlich störenden benachbarten Basisstationen oberhalb oder auf der Lastschwelle liegt.

11. Basisstation nach Anspruch 8, wobei das Steuergerät feststellt, ob die Last der wenigstens einen benachbarten Basisstation unterhalb der Lastschwelle liegt, indem es benachbarte Basisstationen, welche Übertragungen zum drahtlosen Gerät stören können, auf der Grundlage des Standorts des drahtlosen Geräts oder der empfangenen Signalstärke an einem drahtlosen Gerät, welches den identifizierten Basisstationen zugeordnet ist, identifiziert, eine Last der identifizierten Basisstationen überwacht und die überwachte Last mit der Lastschwelle vergleicht.

12. Basisstation nach Anspruch 11, wobei das Steuergerät die Last der identifizierten Basisstationen durch Empfangen eines Signals von den identifizierten Basisstationen, welches die Last anzeigt, und durch Vergleichen des Signals mit einem Referenzsignal, welches der Lastschwelle entspricht, überwacht.

13. Basisstation nach Anspruch 11, wobei das Steuergerät die Last der identifizierten Basisstationen durch Empfangen eines Signals vom drahtlosen Gerät, welches die Last auf den identifizierten Basisstationen anzeigt, und durch Vergleichen des Signals mit einem Referenzsignal, welches der Lastschwelle entspricht, überwacht.

14. Basisstation nach Anspruch 11, wobei das drahtlose Gerät innerhalb eines Sektors einer Zelle lokalisiert ist und das Steuergerät benachbarte Basisstationen als Basisstationen identifiziert, welche die stärkste Störung des drahtlosen Geräts verursachen.

15. Drahtloses Telekommunikationssystem, wobei das System umfasst:
eine erste Basisstation, wobei die erste Basisstation feststellt, ob benachbarte Basisstationen eines drahtlosen Geräts eine Last unterhalb einer Lastschwelle aufweisen, und Datenübertragungen zum drahtlosen Gerät auf der Grundlage der Feststellung einstellt,
**dadurch gekennzeichnet, dass**:
die benachbarten Basisstationen benachbarte Basisstationen sind, welche möglicherweise die stärkste Störung des drahtlosen Geräts verursachen; und
die Einstellung das Einstellen von Zeitschlitzen der Übertragungen umfasst.

16. System nach Anspruch 15, wobei die erste Basisstation die Datenübertragung einstellt, indem zum drahtlosen Gerät mit hoher Priorität übertragen wird, falls festgestellt wird, dass die Last der benachbarten Basisstationen unterhalb der Lastschwelle liegt.

17. System nach Anspruch 15, wobei die erste Basisstation die Datenübertragung einstellt, indem zum drahtlosen Gerät mit geringer Priorität übertragen wird, falls festgestellt wird, dass die Last der benachbarten Basisstationen nicht unterhalb der Lastschwelle liegt.

18. System nach Anspruch 15, wobei die erste Basisstation feststellt, ob die benachbarten Basisstationen eine Last unterhalb der Lastschwelle aufweisen, indem sie benachbarte Basisstationen, welche Übertragungen zum drahtlosen Gerät stören können, auf der Grundlage des Standorts des drahtlosen Geräts oder der empfangenen Signalstärken von den identifizierten Basisstationen identifiziert, die Last der identifizierten Basisstationen überwacht und die überwachte Last mit der Lastschwelle vergleicht.

19. System nach Anspruch 18, wobei die erste Basisstation die Last der identifizierten Basisstationen durch Empfangen eines Signals von den identifizierten Basisstationen, welches die Last anzeigt, und durch Vergleichen des Signals mit einem Referenzsignal, welches der Lastschwelle entspricht, überwacht.

20. System nach Anspruch 18, wobei die erste Basisstation die Last der identifizierten Basisstationen durch Empfangen eines Signals vom drahtlosen Gerät, welches die Last auf den identifizierten Basisstationen anzeigt, und durch Vergleichen des Signals mit einem Referenzsignal, welches der Lastschwelle entspricht, überwacht.

## Revendications

1. Procédé de transmission d'informations à un dispositif sans fil dans un système de télécommunications, ledit procédé comprenant les étapes de :
détermination si au moins une station de base voisine du dispositif sans fil a une charge inférieure à un seuil de charge ; et
réglage des transmissions de données au dispositif sans fil en fonction de la détermination ; **caractérisé en ce que** :
ladite station de base voisine est une station de base voisine causant potentiellement une interférence pour ledit dispositif sans fil ; et
ledit réglage comprend le réglage de tranches de temps desdites transmissions.

2. Procédé selon la revendication 1, dans lequel ladite étape de réglage confère une haute priorité à la transmission au dispositif sans fil s'il est déterminé que la charge de l'au moins une station de base voisine est inférieure au seuil de charge.

3. Procédé selon la revendication 1, dans lequel ladite étape de réglage transmet au dispositif sans fil avec une basse priorité s'il est déterminé que la charge de l'au moins une station de base voisine n'est pas inférieure au seuil de charge.

4. Procédé selon la revendication 1, dans lequel ladite étape de détermination comprend :
l'identification des stations de base voisines qui risquent d'interférer avec les transmissions au dispositif sans fil en fonction de la position du dispositif sans fil et des forces de signaux reçus au niveau d'un dispositif sans fil associé aux stations de base identifiées ;
le contrôle de la charge des stations de base identifiées ; et
la comparaison de la charge contrôlée au seuil de charge.

5. Procédé selon la revendication 4, dans lequel ladite étape de contrôle comprend :
la réception d'un signal indicatif de la charge depuis les stations de base identifiées ; et
la comparaison du signal à un signal de référence correspondant au seuil de charge.

6. Procédé selon la revendication 4, dans lequel ladite étape de contrôle comprend :
la réception d'un signal indicatif de la charge sur les stations de base identifiées depuis le dispositif sans fil ; et
la comparaison du signal à un signal de référence correspondant au seuil de charge.

7. Procédé selon la revendication 1, dans lequel le dispositif sans fil est situé dans un secteur d'une cellule et l'au moins une station de base voisine est une station de base qui produit une interférence considérable pour le dispositif sans fil.

8. Station de base d'un système de télécommunications sans fil, ladite station de base comprenant :
un contrôleur, ledit contrôleur servant à déterminer si au moins une station de base voisine d'un dispositif sans fil a une charge inférieure à un seuil de charge et à régler les transmissions de données au dispositif sans fil en fonction de la détermination ; **caractérisée en ce que** :
ladite station de base voisine est une station de base voisine causant potentiellement une interférence pour ledit dispositif sans fil ; et
ledit réglage comprend le réglage de tranches de temps desdites transmissions.

9. Station de base selon la revendication 8, dans laquelle ledit contrôleur règle la transmission de données en transmettant au dispositif sans fil à un débit de données élevé s'il est déterminé qu'une charge globale provenant d'une station de base voisine considérablement interférente est inférieure au seuil de charge.

10. Station de base selon la revendication 8, dans laquelle ledit contrôleur règle la transmission de données en transmettant au dispositif sans fil avec une basse priorité s'il est déterminé qu'une charge globale provenant de stations de base voisines considérablement interférentes est supérieure ou égale au seuil de charge.

11. Station de base selon la revendication 8, dans laquelle ledit contrôleur détermine si la charge de l'au moins une station de base voisine est inférieure au seuil de charge en identifiant des stations de base voisines qui risquent d'interférer avec des transmissions au dispositif sans fil en fonction de la position du dispositif sans fil ou d'une force de signal reçu au niveau d'un dispositif sans fil associé aux stations de base identifiées, en contrôlant une charge des stations de base identifiées et en comparant la charge contrôlée au seuil de charge.

12. Station de base selon la revendication 11, dans laquelle ledit contrôleur contrôle la charge des stations de base identifiées en recevant un signal indicatif de la charge provenant des stations de base identifiées et en comparant le signal à un signal de référence correspondant au seuil de charge.

13. Station de base selon la revendication 11, dans laquelle ledit contrôleur contrôle la charge des stations de base identifiées en recevant un signal indicatif de la charge sur les stations de base identifiées provenant du dispositif sans fil et en comparant le signal à un signal de référence correspondant au seuil de charge.

14. Station de base selon la revendication 11, dans laquelle le dispositif sans fil est situé dans un secteur d'une cellule et le contrôleur identifie les stations de base voisines comme des stations de base qui produisent le plus d'interférence pour le dispositif sans fil.

15. Système de télécommunications sans fil, ledit système comprenant :
une première station de base, ladite première station de base servant à déterminer si les stations de base voisines d'un dispositif sans fil ont une charge inférieure à un seuil de charge et pour régler les transmissions de données au dispositif sans fil en fonction de la détermination ; **caractérisé en ce que** :
lesdites stations de base voisines sont des stations de base voisines causant potentiellement le plus d'interférence pour ledit dispositif sans fil ; et
ledit réglage comprend le réglage de tranches de temps desdites transmissions.

16. Système selon la revendication 15, dans lequel ladite première station de base règle la transmission de données en transmettant au dispositif sans fil avec une haute priorité s'il est déterminé que la charge des stations de base voisines est inférieure au seuil de charge.

17. Système selon la revendication 15, dans lequel ladite première station de base règle la transmission de données en transmettant au dispositif sans fil avec une basse priorité s'il est déterminé que la charge des stations de base voisines n'est pas inférieure au seuil de charge.

18. Système selon la revendication 15, dans lequel ladite première station de base détermine si les stations de base voisines ont une charge inférieure au seuil de charge en identifiant les stations de base voisines qui risquent d'interférer avec des transmissions au dispositif sans fil en fonction de la position du dispositif sans fil ou des forces de signaux reçus depuis les stations de base identifiées, en contrôlant la charge des stations de base identifiées et en comparant la charge contrôlée au seuil de charge.

19. Système selon la revendication 18, dans lequel ladite première station de base contrôle la charge des stations de base identifiées en recevant un signal indicatif de la charge provenant des stations de base identifiées et en comparant le signal à un signal de référence correspondant au seuil de charge.

20. Système selon la revendication 18, dans lequel ladite première station de base contrôle la charge des stations de base identifiées en recevant un signal indicatif de la charge sur les stations de base identifiées provenant du dispositif sans fil et en comparant le signal à un signal de référence correspondant au seuil de charge.
